(19) **Europäisches Patentamt**

**European Patent Office**

**Office européen des brevets**

(11) **EP 1 284 538 A2**

(12) **EUROPÄISCHE PATENTANMELDUNG**

(43) Veröffentlichungstag:
**19.02.2003 Patentblatt 2003/08**

(51) Int Cl.⁷: **H02J 3/18**

(21) Anmeldenummer: **02405679.8**

(22) Anmeldetag: **07.08.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **14.08.2001 US 928488**

(71) Anmelder: **ABB Schweiz AG**
**5400 Baden (CH)**

(72) Erfinder:
• **Gerhard, Bilal**
**5443 Niederrohrdorf (CH)**

• **Daniel, John**
**Apex, NC 27502 (US)**
• **Manjrekar, Madhav**
**Broockfield, WI 53045 (US)**

(74) Vertreter: **ABB Patent Attorneys**
**c/o ABB Schweiz AG,**
**Intellectual Property (CH-LC/IP),**
**Brown Boveri Strasse 6**
**5400 Baden (CH)**

(54) **Verfahren zum Betrieb einer Ladevorrichtung für eine Spannungserhaltungseinrichtung sowie Vorrichtung zur Durchführung des Verfahrens**

(57) Es wird ein Verfahren zum Betrieb einer Ladevorrichtung (1) für eine Spannungserhaltungseinrichtung (2) angegeben, bei dem ein an Phaseneingängen ($P_A$; $P_B$; $P_C$) über einen Transformator (3) mit einem elektrischen Wechselspannungsversorgungsnetz (4) verbundener Gleichrichter (5) der Ladevorrichtung (1) mittels eines aus Referenzladespannungen ($U_{LA, ref}$; $U_{LB, ref}$; $U_{LC, ref}$) gebildeten Ansteuersignals (S) angesteuert wird. An jedem Phaseneingang ($P_A$; $P_B$; $P_C$) wird weiterhin eine Ladespannung ($U_{LA}$; $U_{LB}$; $U_{LC}$) für die entsprechende Phase (A; B; C) erzeugt, wobei auf der Gleichspannungsseite des Gleichrichters (5) eine im wesentlichen konstante Gleichspannung ($U_{DC}$) generiert wird. Jede Ladespannung ($U_{LA}$; $U_{LB}$; $U_{LC}$) wird derart erzeugt, dass in der entsprechenden Phase (A; B; C) ein Ladestrom ($I_{LA}$; $I_{LB}$; $I_{LC}$) im wesentlichen proportional zu einer Phasennetzspannung ($U_{NA}$; $U_{NB}$; $U_{NC}$) der entsprechenden Phase (A; B; C) des elektrischen Wechselspannungsversorgungsnetz (3) eingeprägt wird. Ferner wird eine Vorrichtung zur Durchführung des Verfahrens offenbart.

Fig. 1

EP 1 284 538 A2

**Beschreibung**

**Technisches Gebiet**

Die vorliegende Erfindung bezieht sich auf das Gebiet der Leistungselektronik. Sie betrifft ein Verfahren zum Betrieb einer Ladevorrichtung für eine Spannungserhaltungseinrichtung sowie eine Vorrichtung zur Durchführung des Verfahrens gemäss dem Oberbegriff der unabhängigen Ansprüche.

**Stand der Technik**

Herkömmliche Spannungserhaltungseinrichtungen werden heute hauptsächlich zur Kompensation von Spannungseinbrüchen der Netzspannung, infolge von Kurzschlüssen oder Lastwechseln, in einem elektrischen Wechselspannungsversorgungsnetz eingesetzt. Eine derartige Spannungserhaltungseinrichtung ist beispielsweise in der US 5,329,22 angegeben. Darin ist ein Speicherkondensator gleichspannungsseitig mit einem Wechselrichter verbunden, der wechselspannungsseitig an eine Sekundärseite eines Transformators angeschlossen ist. Die Primärseite des Transformators ist in eine der Phasen des elektrischen Wechselspannungsversorgungsnetzes eingeschaltet. Der Wechselrichter wird derart angesteuert, dass eine Einspeisespannung, die eine Wechselspannung ist, im Falle eines Spannungseinbruchs in der Netzspannung erzeugt wird. Diese Einspeisespannung dient der Kompensation der eingebrochenen Netzspannung, wobei die erzeugte Einspeisespannung zu der eingebrochenen Netzspannung addiert wird, so dass eine an der Phase anliegende Phasennetzspannung unbeeinflusst bleibt und damit unverändert erhalten werden kann. Die zur Erzeugung der Einspeisespannung notwendige elektrischen Energie wird aus dem Speicherkondensator bezogen, der bei Energiebezug mittels einer Ladevorrichtung nachgeladen werden muss, wobei die Gleichspannung am Speicherkondensator möglichst konstant gehalten werden muss.

Eine geeignete Ladevorrichtung für eine Spannungserhaltungseinrichtung ist beispielsweise in "IEEE Transactions on Industrial Electronics, Vol.46, No. 5, October 1999" offenbart. Darin ist ein Gleichrichter der Ladevorrichtung an seinen Phaseneingängen über einen Transformator mit dem elektrischen Wechselspannungsversorgungsnetz verbunden. Weiterhin ist eine Regelungseinrichtung vorgesehen, die der Erzeugung von Referenzladespannungen dient, wobei aus den Referenzladespannungen mittels einer mit der Regelungseinrichtung verbundenen Ansteuerschaltung ein Ansteuersignal zur Ansteuerung von Leistungshalbleiterschaltern des Gleichrichters gebildet wird. Der Gleichrichter erzeugt an jedem Phaseneingang durch Schalten der Leistungshalbleiterschalter entsprechend dem Ansteuersignal eine Ladespannung für die entsprechende Phase. Auf der Gleichspannungsseite des Gleichrichters generiert der Gleichrichter zudem eine im wesentlichen konstante Gleichspannung und lädt den Speicherkondensator damit auf.

Problematisch bei einem solchen Betrieb einer Ladevorrichtung ist, dass zwar bei Auftreten eines Spannungseinbruchs in einer der Phasen die Gleichspannung auf der Gleichspannungsseite des Gleichrichters im wesentlichen konstant gehalten werden kann, jedoch in der Phase mit dem Spannungseinbruch ein gegenüber den nicht vom Spannungseinbruch betroffenen Phasen erhöhter Ladestrom vom Gleichrichter bezogen wird, um dem Speicherkondensator zu laden. Dieser erhöhte Ladestrom belastet aber die Phase, insbesondere die schon eingebrochene Phasennetzspannung zusätzlich, so dass die ohnehin schon reduzierte Phasennetzspannung noch kleiner wird. Bei einem schwachen elektrischen Wechselspannungsversorgungsnetz kann dies aber bei einer an ein solches Wechselspannungsversorgungsnetz angeschlossenen elektrischen Last zu einer nicht ausreichenden Versorgung mit elektrischer Energie führen, wodurch die elektrische Last beschädigt oder zerstört werden kann und/oder das elektrische Wechselspannungsversorgungsnetz infolge der zu niederen Phasenspannung in der betroffenen Phase abgeschaltet werden muss. Die geforderte hohe Verfügbarkeit des elektrischen Wechselspannungsversorgungsnetzes ist dann nicht mehr gegeben.

**Darstellung der Erfindung**

Aufgabe der Erfindung ist es deshalb, ein Verfahren zum Betrieb einer Ladevorrichtung für eine Spannungserhaltungseinrichtung anzugeben, welches einen Ladestrom der Ladevorrichtung in einer von einem Einbruch einer Phasennetzspannung betroffenen Phase eines elektrischen Wechselspannungsversorgungsnetzes generiert, der die reduzierte Phasennetzspannung in der betroffenen Phase nicht oder nur unwesentlich mehr belastet. Ferner ist eine Vorrichtung anzugeben, mit der das Verfahren in besonders einfacher Weise durchgeführt wird. Diese Aufgabe wird durch die Merkmale des Anspruchs 1 und 10 gelöst. In den Unteransprüchen sind vorteilhafte Weiterbildungen der Erfindung angegeben.

Beim erfindungsgemässen Verfahren zum Betrieb einer Ladevorrichtung für eine Spannungserhaltungseinrichtung wird ein an Phaseneingängen über einen Transformator mit einem elektrischen Wechselspannungsversorgungsnetz verbundener Gleichrichter der Ladevorrichtung mittels eines aus Referenzladespannungen gebildeten Ansteuersignals angesteuert. An jedem Phaseneingang wird weiterhin eine Ladespannung für die entsprechende Phase erzeugt, wobei auf der Gleichspannungsseite des Gleichrichters eine im wesentlichen konstante Gleichspannung generiert wird. Erfindungsgemäss wird jede Ladespannung derart erzeugt, dass in der entsprechenden Phase ein Ladestrom im wesentlichen proportional zu einer Phasennetzspannung der entsprechenden Phase des elektrischen Wechselspannungsversorgungsnetzes eingeprägt wird. Dadurch wird besonders vorteilhaft erreicht, dass bei einem Spannungseinbruch in der Phasennetzspannung, diese nicht weiter oder zumindest nur unwesentlich mehr durch den Ladestrom der Ladevorrichtung belastet wird, so dass eine weitere Reduktion beziehungsweise wesentliche Belastung der bereits durch den Einbruch reduzierten Phasennetzspannung erfolgreich vermieden werden kann. Damit kann eine ausreichende Versorgung einer an ein insbesondere schwaches elektrisches Wechselspannungsversorgungsnetz angeschlossenen elektrischen Last mit elektrischer Energie gewährleistet werden. Zudem ist durch das erfindungsgemässe Verfahren eine hohe Verfügbarkeit des elektrischen Wechselspannungsversorgungsnetzes gegeben, da ein wie aus dem Stand der Technik bekannter erhöhter Ladestrom nicht erzeugt wird, der die schon reduzierte Phasennetzspannung derart weiter reduzieren könnte, dass das elektrische Wechselspannungsversorgungsnetz abgeschaltet werden muss.

Die erfindungsgemässe Vorrichtung zur Durchführung des Verfahren zum Betrieb der Ladevorrichtung für eine Spannungserhaltungseinrichtung weist eine der Erzeugung der Referenzladespannungen dienende Regelungseinrichtung auf, die über eine Ansteuerschaltung zur Bildung des Ansteuersignals aus den Referenzladespannungen mit dem Gleichrichter verbunden ist. Erfindungsgemäss umfasst die Regelungseinrichtung eine Berechnungseinheit zur Bildung der Referenzladespannungen, der Phasennetzspannungen des elektrischen Wechselspannungsversorgungsnetzes eingangsseitig zugeführt sind, wobei jeweils eine Phasennetzspannung einer Impedanzanpasseinrichtung der entsprechenden Phase zugeführt ist. Desweiteren umfasst die Regelungseinrichtung eine Reglereinheit zur Erzeugung eines Referenzphasenstromamplitudenwertes, der die Gleichspannung und ein Gleichspannungssollwert zugeführt sind, wobei der Referenzphasenstromamplitudenwert jeder Impedanzanpasseinrichtung eingangsseitig zugeführt ist. Die erfindungsgemässe Vorrichtung zur Durchführung des Verfahren zum Betrieb der Ladevorrichtung für eine Spannungserhaltungseinrichtung ist somit sehr einfach und kostengünstig realisierbar, da der Schaltungsaufwand äusserst gering gehalten werden kann und zudem nur eine geringe Anzahl an Bauelementen für den Aufbau benötigt wird. Mittels dieser Vorrichtung ist das erfindungsgemässe Verfahren somit besonders einfach durchführbar.

Diese und weitere Aufgaben, Vorteile und Merkmale der vorliegenden Erfindung werden aus der nachfolgenden detaillierten Beschreibung eines bevorzugten Ausführungsbeispiels der Erfindung in Verbindung mit der Zeichnung offensichtlich.

## Kurze Beschreibung der Zeichnungen

Es zeigen:

Fig. 1    eine Ausführungsform einer Spannungserhaltungseinrichtung mit einer erfindungsgemässen Vorrichtung zum Betrieb einer Ladevorrichtung für die Spannungserhaltungseinrichtung,

Fig. 2    ein Zeigerdiagramm der für den Betrieb der Ladevorrichtung relevanten Spannungen,

Fig. 3    eine Ausführungsform einer Regelungseinrichtung der erfindungsgemässen Vorrichtung nach Fig. 1 und

Fig. 4    eine Ausführungsform einer Impedanzanpasseinrichtung der Regelungseinrichtung nach Fig. 3.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebene Ausführungsform steht beispielhaft für den Erfindungsgegenstand und hat keine beschränkende Wirkung.

## Wege zur Ausführung der Erfindung

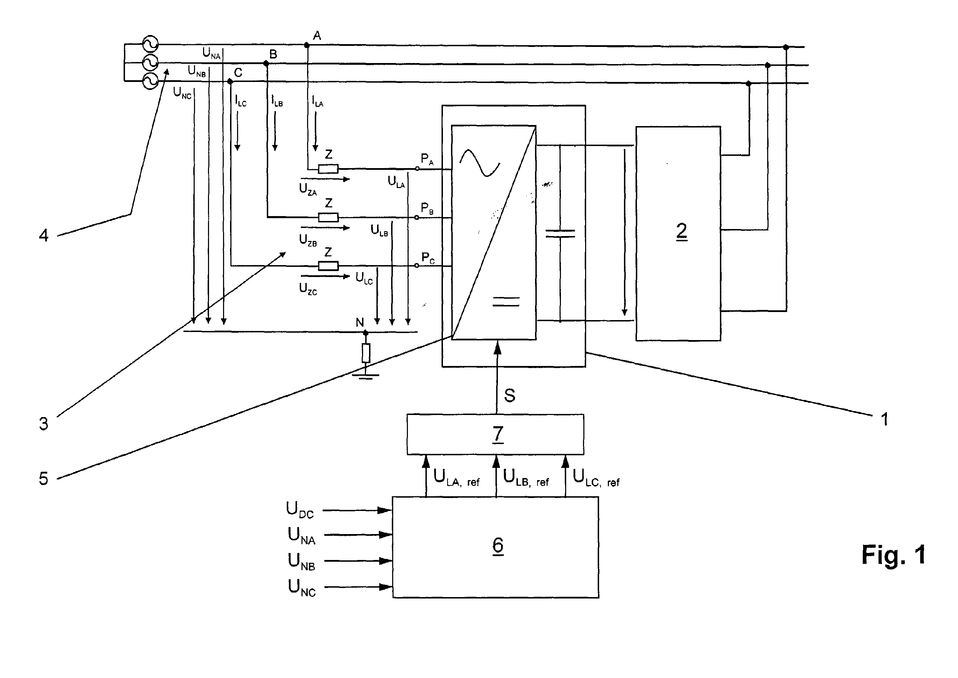

In Fig. 1 ist eine Ausführungsform einer Spannungserhaltungseinrichtung 2 mit einer erfindungsgemässen Vorrichtung zum Betrieb einer Ladevorrichtung 1 für die Spannungserhaltungseinrichtung 1 gezeigt. Die Ladevorrichtung 1 weist gemäss Fig.1 einen Gleichrichter 5 auf, der mit seiner Gleichspannungsseite mit einem Speicherkondensator verbunden ist. Auf der Wechselspannungsseite des Gleichrichters 5, d.h. an seinen Phaseneingängen $P_A$, $P_B$, $P_C$ ist der Gleichrichter 5 über einen Transformator 3 mit Phasen A, B, C eines elektrischen Wechselspannungsversorgungsnetzes 4 verbunden. Gemäss Fig. 1 ist der Transformator für jede Phase A, B, C als Impedanz Z dargestellt, welche die Transformatorimpedanz für die entsprechende Phase A, B, C darstellt. An jedem Phaseneingang $P_A$, $P_B$, $P_C$ der entsprechenden Phase A, B, C ist somit gemäss Fig. 1 eine solche Impedanz Z angeschlossen. Die Impedanz Z, insbesondere deren Impedanzbetragswert |Z| und deren Impedanzwinkel $\alpha$ ist entweder durch Angaben des Transformatorherstellers gegeben oder durch einfache Messung am Transformator 3 ermittelbar.

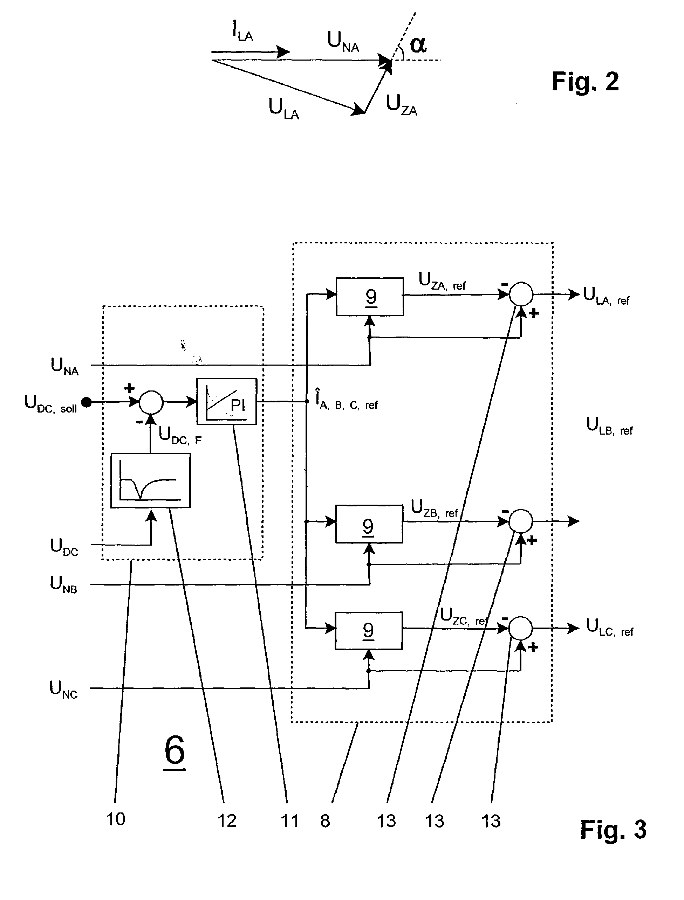

Beim erfindungsgemässen Verfahren zum Betrieb der Ladevorrichtung 1 für die Spannungserhaltungseinrichtung 2 wird der Gleichrichter 5 mittels eines aus Referenzladespannungen $U_{LA, ref}$, $U_{LB, ref}$, $U_{LC, ref}$ gebildeten Ansteuersignals S angesteuert, insbesondere Leistungshalbleiterschalter des Gleichrichters 5, wobei dadurch an jedem Phaseneingang $P_A$, $P_B$, $P_C$ gegenüber einem Phasennullpunkt N eine Ladespannung $U_{LA}$, $U_{LB}$, $U_{LC}$ für die entsprechende Phase A, B, C erzeugt wird und auf der Gleichspannungsseite des Gleichrichters 5 eine im wesentlichen konstante Gleichspannung $U_{DC}$ generiert wird. Jede Ladespannung $U_{LA}$, $U_{LB}$, $U_{LC}$ wird derart erzeugt, dass in der entsprechenden Phase A, B, C ein Ladestrom $I_{LA}$, $I_{LB}$, $I_{LC}$ im wesentlichen proportional zu einer Phasennetzspannung $U_{NA}$, $U_{NB}$, $U_{NC}$ der entsprechenden Phase A, B, C des elektrischen Wechselspannungsversorgungsnetz 4 eingeprägt wird. Jede Phasennetzspannung $U_{NA}$, $U_{NB}$, $U_{NC}$ liegt dabei gemäss Fig. 1 zwischen ihrer entsprechenden Phase A, B, C und dem Phasennullpunkt N an. Die Proportionalität des Ladestromes $I_{LA}$, $I_{LB}$, $I_{LC}$ zur entsprechenden Phasennetzspannung $U_{NA}$, $U_{NB}$, $U_{NC}$ bezieht sich auf die Amplitude und die Phasenlage des Ladestrom $I_{LA}$, $I_{LB}$, $I_{LC}$, d.h., dass bei einem Spannungseinbruch in der Phasennetzspannung $U_{NA}$, $U_{NB}$, $U_{NC}$ diese nicht weiter oder zumindest nur unwesentlich mehr durch den Ladestrom $I_{LA}$, $I_{LB}$, $I_{LC}$ der entsprechenden Phase A, B, C belastet wird, da dieser vorteilhaft entsprechend der durch den Einbruch reduzierten Phasennetzspannung $U_{NA}$, $U_{NB}$, $U_{NC}$ reduziert wird. Eine weitere Reduktion beziehungsweise wesentliche Belastung der bereits durch den Einbruch reduzierten Phasennetzspannung $U_{NA}$, $U_{NB}$, $U_{NC}$ kann damit erfolgreich vermieden werden. In Fig. 2 ist ein Zeigerdiagramm der für den Betrieb der Ladevorrichtung relevanten Spannungen dargestellt, wobei nur die relevanten Spannungen der Phase A dargestellt sind. Aus Fig. 2 ist somit die vorstehend beschriebene Proportionalität des Ladestromes $I_{LA}$, $I_{LB}$, $I_{LC}$ nur für die relevanten Spannungen der Phase A mit dem zugehörigen Ladestrom $I_{LA}$ gezeigt, wobei diese repräsentativ für die anderen Phasen B und C stehen. Da der Ladestrom $I_{LA}$, $I_{LB}$, $I_{LC}$ bezüglich seiner Phasenlage gemäss Fig. 2 gleich der Phasennetzspannung $U_{NA}$, $U_{NB}$, $U_{NC}$ der entsprechenden Phase A, B, C ist, bezieht der Gleichrichter 5 somit vorteilhaft nur Wirkleistung. Eine Belastung des elektrischen Wechselspannungsversorgungsnetzes 4 durch Blindleistungsbezug des Gleichrichters 5 aus einer der Phasen A, B, C ist damit nicht gegeben.

Nachfolgend wird nun detailliert auf das erfindungsgemässe Verfahren eingegangen. Die Referenzladespannung $U_{LA,ref}$ $U_{LB, ref}$, $U_{LC, ref}$ wird erfindungsgemäss aus der Phasennetzspannung $U_{NA}$, $U_{NB}$, $U_{NC}$ der entsprechenden Phase A, B, C und einem durch Ausregeln der Gleichspannung $U_{DC}$ auf einen Gleichspannungssollwert $U_{DC, soll}$ erzeugten Referenzphasenstromamplitudenwert $\hat{I}_{A, B, C, ref}$ gebildet. Vorteilhaft erfolgt die Ausregelung nach Massgabe einer Proportional-Integral-Charakteristik. Ferner wird mindestens eine bezüglich der Phasennetzspannung $U_{NA}$, $U_{NB}$, $U_{NC}$ harmonische Oberschwingung aus der Gleichspannung $U_{DC}$ ausgefiltert, da solche Oberschwingungen durch das Schalten der Leistungshalbleiterschalter des Gleichrichters 5 auf das Ansteuersignal S hin erzeugt werden und einen im wesentlichen konstanten Verlauf der Gleichspannung $U_{DC}$ verhindern würden.

Wie bereits vorstehend beschrieben, wird die Referenzladespannung $U_{LA, ref}$, $U_{LB, ref}$, $U_{LC, ref}$ aus der Phasennetzspannung $U_{NA}$, $U_{NB}$, $U_{NC}$ der entsprechenden Phase A, B, C und dem Referenzphasenstromamplitudenwert $\hat{I}_{A, B, C, ref}$ gebildet. Zunächst wird dazu aus dem Referenzphasenstromamplitudenwert $\hat{I}_{A,B, C, ref}$ und der Phasennetzspannung $U_{NA}$, $U_{NB}$, $U_{NC}$ eine Phasenimpedanzreferenzspannung $U_{ZA,ref}$, $U_{ZB,ref}$, $U_{ZB,ref}$ der entsprechenden Phase A, B, C gebildet. Anschliessend wird die Referenzladespannung $U_{LA, ref}$, $U_{LB, ref}$, $U_{LC, ref}$ durch Subtraktion der Phasenimpedanzreferenzspannung $U_{ZA,ref}$, $U_{ZB,ref}$, $U_{ZB,ref}$ von der Phasennetzspannung $U_{NA}$, $U_{NB}$, $U_{NC}$ gebildet.

Die Phasenimpedanzreferenzspannung $U_{ZA,ref}$, $U_{ZB,ref}$, $U_{ZB,ref}$ wird darüber hinaus aus einem Phasenimpedanzreferenzspannungsamplitudenwert $\hat{U}_{ZA,ref}$, $\hat{U}_{ZB,ref}$, $\hat{U}_{ZB,ref}$ der entsprechenden Phase A, B, C und einer normierten Phasennetzspannung $U_{NA, \alpha, nom}$, $U_{NB, \alpha, nom}$, $U_{NC, \alpha, nom}$ der entsprechenden Phase A, B, C erzeugt. Der vorstehend genannte Phasenimpedanzreferenzspannungsamplitudenwert $\hat{U}_{ZA,ref}$, $\hat{U}_{ZB,ref}$, $\hat{U}_{ZB,ref}$ wird aus dem Referenzphasenstromamplitudenwert $\hat{I}_{A, B, C, ref}$ und dem Impedanzbetragswert $|Z|$ der an jedem Phaseneingang $P_A$, $P_B$, $P_C$ der entsprechenden Phase A, B, C angeschlossenen Impedanz Z des Transformators 3 gebildet. Die Bildung des Phasenimpedanzreferenzspannungsamplitudenwertes $\hat{U}_{ZA,ref}$, $\hat{U}_{ZB,ref}$, $\hat{U}_{ZB,ref}$ erfolgt nach Massgabe der Formel

$$\hat{U}_{ZA,ref} = \hat{I}_{A, B, C} \cdot |Z|,$$

wobei der Phasenimpedanzreferenzspannungsamplitudenwert $\hat{U}_{ZA,ref}$ für die Phase A stellvertretend für die Phasenimpedanzreferenzspannungsamplitudenwerte $\hat{U}_{ZB,ref}$, $\hat{U}_{ZB,ref}$ der Phase B und C angeben ist, die auf dieselbe Weise gebildet werden.

Die normierte Phasennetzspannung $U_{NA,\alpha,nom}$, $U_{NB,\alpha,nom}$, $U_{NC, \alpha, nom}$ wird weiterhin mittels Division einer verschobenen Phasennetzspannung $U_{NA, \alpha}$, $U_{NB,\alpha}$, $U_{NC, \alpha}$ der entsprechenden Phase A, B, C durch einen konstanten Phasenspannungsamplitudenwert $\hat{U}_{NABC}$ nach Massgabe der Formel

$$U_{NA, \alpha, nom} = \frac{U_{NA, \alpha}}{\hat{U}_{NABC}}$$

gebildet, wobei die normierte Phasennetzspannung $U_{NA, \alpha, nom}$ für die Phase A stellvertretend für die normierten Phasennetzspannungen $U_{NB, \alpha, nom}$, $U_{NC, \alpha, nom}$ der Phase B und C angeben ist, die auf dieselbe Weise gebildet werden.

Die verschobene Phasennetzspannung

$U_{NA, \alpha}$, $U_{NB, \alpha}$, $U_{NC, \alpha}$ wird durch Verschiebung der Phasennetzspannung $U_{NA}$, $U_{NB}$, $U_{NC}$ um den Impedanzwinkel $\alpha$ der an jedem Phaseneingang $P_A$, $P_B$, $P_C$ der entsprechenden Phase A, B, C angeschlossenen Impedanz Z des Transformators gebildet. Die Bildung der verschobenen Phasennetzspannung $U_{NA, \alpha}$, $U_{NB, \alpha}$, $U_{NC, \alpha}$ erfolgt nach Massgabe der Formel

$$U_{NA,\alpha} = U_{NA} \cdot e^{j\alpha},$$

wobei die verschobene Phasennetzspannung $U_{NA, \alpha}$, $U_{NB, \alpha}$, $U_{NC, \alpha}$ für die Phase A stellvertretend für die verschobenen Phasennetzspannungen $U_{NB, \alpha}$, $U_{NC,\alpha}$ der Phase B und C angeben ist, die auf dieselbe Weise gebildet werden.

Insgesamt lässt sich somit durch die vorstehend detailliert beschriebene Bildung der Referenzladespannung $U_{LA, ref}$, $U_{LB, ref}$; $U_{LC, ref}$ eine Ladespannung $U_{LA}$, $U_{LB}$, $U_{LC}$ für jede einzelne Phase A, B, C erzeugen, die der im Zeigerdiagramm gemäss Fig. 2 entspricht, so dass vorteilhaft der Ladestrom $I_{LA}$, $I_{LB}$, $I_{LC}$, welcher im wesentlichen proportional zu der Phasennetzspannung $U_{NA}$, $U_{NB}$, $U_{NC}$ der entsprechenden Phase A, B, C ist, gemäss Fig. 2 eingeprägt wird.

Gemäss Fig. 1 weist die erfindungsgemässe Vorrichtung zur Durchführung des vorstehend beschriebenen Verfahrens zum Betrieb der Ladevorrichtung 1 eine der Erzeugung der Referenzladespannungen $U_{LA, ref}$, $U_{LB, ref}$, $U_{LC, ref}$ dienende Regelungseinrichtung 6 auf, die über eine Ansteuerschaltung 7 zur Bildung des Ansteuersignals S aus den Referenzladespannungen $U_{LA, ref}$, $U_{LB, ref}$, $U_{LC, ref}$ mit dem Wechselrichter 5 verbunden ist. In Fig. 3 ist eine Ausführungsform der Regelungseinrichtung 6 der erfindungsgemässen Vorrichtung nach Fig. 1 gezeigt, in der die Regelungseinrichtung 6 erfindungsgemäss eine Berechnungseinheit 8 zur Bildung der Referenzladespannungen $U_{LA, ref}$, $U_{LB, ref}$, $U_{LC, ref}$ umfasst. Dieser Berechnungseinheit 8 sind die Phasennetzspannungen $U_{NA}$, $U_{NB}$, $U_{NC}$ des elektrischen Wechselspannungsversorgungsnetzes 4 eingangsseitig zugeführt, wobei jeweils eine Phasennetzspannung $U_{NA}$, $U_{NB}$, $U_{NC}$ einer Impedanzanpasseinrichtung 9 der entsprechenden Phase A, B, C zugeführt ist. Die Phasennetzspannungen $U_{NA}$, $U_{NB}$, $U_{NC}$ werden an Messpunkten der entsprechenden Phasen A, B, C gemessen und abgegriffen, wobei diese Messpunkte in Fig. 1 der Übersichtlichkeit halber nicht gezeigt sind. Desweiteren weist die Regelungseinrichtung 6 gemäss Fig. 3 eine Reglereinheit 10 zur Erzeugung des Referenzphasenstromamplitudenwertes $\hat{I}_{A, B, C, ref}$ auf, der die Gleichspannung $U_{DC}$ und ein Gleichspannungssollwert $U_{DC, soll}$ zugeführt sind. Die Gleichspannung $U_{DC}$ wird an Messpunkten am Speicherkondensator gemessen und abgegriffen, wobei diese Messpunkte in Fig. 1 der Übersichtlichkeit halber nicht gezeigt sind. Der Gleichspannungssollwert $U_{DC, soll}$ ist vorteilhaft vorgebbar, so dass die Gleichspannung $U_{DC}$ durch eine solche Vorgabe auf einen beliebigen Wert ausgeregelt und damit eingestellt werden kann. Gemäss Fig. 3 ist der Referenzphasenstromamplitudenwert $\hat{I}_{A, C, ref}$ weiterhin jeder Impedanzanpasseinrichtung 9 eingangsseitig zugeführt ist.

Die Reglereinheit 10 weist ferner einen Proportional-Integral-Regler 11 mit der vorstehend erwähnten Proportional-Integral-Charakteristik auf, dem ein Gleichspannungsdifferenzsignal $U_{DC, diff}$ eingangsseitig zugeführt ist. Das Gleichspannungsdifferenzsignal $U_{DC, diff}$ ist gemäss Fig. 3 durch den Gleichspannungssollwert $U_{DC, soll}$ und einen gefilterten Gleichspannungswert $U_{DC, F}$ gebildet, wobei der gefilterte Gleichspannungswert $U_{DC, F}$ am Ausgang eines Oberschwingungsfilters 12 anliegt. Dieses Oberschwingungsfilter 12 dient der Ausfilterung mindestens einer bezüglich der Phasennetzspannung $U_{NA}$, $U_{NB}$, $U_{NC}$ harmonischen Oberschwingung aus der Gleichspannung $U_{DC}$, wobei dem Oberschwingungsfilter zu diesem Zweck die Gleichspannung $U_{DC}$ eingangsseitig zugeführt ist. Am Ausgang der Reglereinheit 10, insbesondere am Ausgang des Proportional-Integral-Reglers 11 liegt gemäss Fig. 3 der Referenzphasenstromamplitudenwert $\hat{I}_{A, B, C, ref}$ an. Gemäss Fig. 3 liegt die Phasenimpedanzreferenzspannung $U_{ZA,ref}$, $U_{ZB,ref}$, $U_{ZB,ref}$ der entsprechenden Phase A, B, C am Ausgang der Impedanzpasseinrichtung 9 an. Die Impedanzanpasseinrichtung 9 ist darüber hinaus mit jeweils einem der Bildung der Referenzladespannung $U_{LA, ref}$, $U_{LB, ref}$, $U_{LC, ref}$ dienenden Subtrahierer 13 ausgangsseitig verbunden. Ferner ist dem Subtrahierer 13 die Phasennetzspannung $U_{NA}$, $U_{NB}$, $U_{NC}$ der entsprechenden Phase A, B, C zugeführt ist, der die Referenzladespannung $U_{LA, ref}$, $U_{LB, ref}$, $U_{LC, ref}$ durch Subtraktion der Phasenimpedanzreferenzspannung $U_{ZA,ref}$, $U_{ZB,ref}$, $U_{ZB,ref}$ von der entsprechenden Phasennetzspannung $U_{NA}$, $U_{NB}$, $U_{NC}$ bildet.

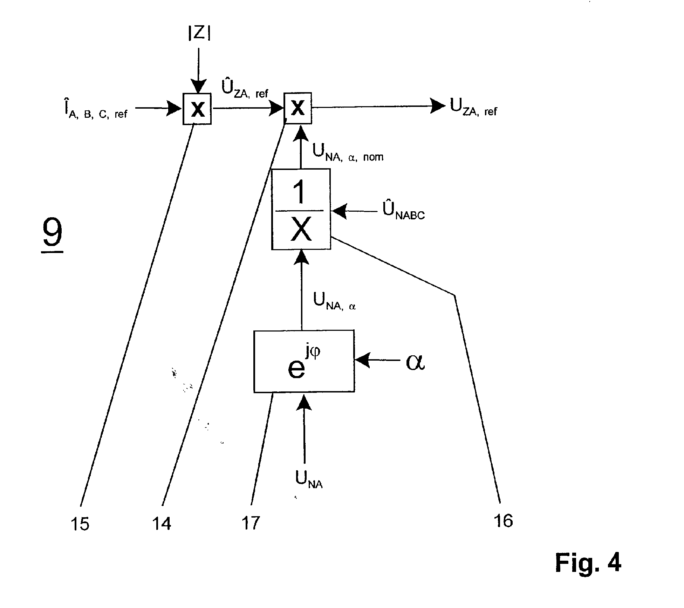

In Fig. 4 ist eine Ausführungsform der Impedanzanpasseinrichtung 9 der Regelungseinrichtung 6 nach Fig. 3 dargestellt. Die in Fig. 4 gezeigte Ausführungsform der Impedanzanpasseinrichtung 9 ist nur für die Phase A mit den entsprechenden Grössen beziehungsweise Bezeichnungen dargestellt und steht stellvertretend für die Impedanzanpasseinrichtung 9 gemäss Fig. 3 der Phase B und C, die auf dieselbe Weise ausgebildet sind. Die Impedanzanpasseinrichtung 9 weist gemäss Fig. 4 einen ersten Multiplizierer 14 zur Erzeugung der Phasenimpedanzreferenzspannung $U_{ZA,ref}$, $U_{ZB,ref}$, $U_{ZB,ref}$ auf, dem der Phasenimpedanzreferenzspannungsamplitudenwert $\hat{U}_{ZA,ref}$, $\hat{U}_{ZB,ref}$, $\hat{U}_{ZB,ref}$ der entsprechenden Phase A, B, C und die normierte Phasennetzspannung $U_{NA, \alpha, nom}$; $U_{NB, \alpha, nom}$, $U_{NC, \alpha, nom}$ der entsprechenden Phase A, B, C zugeführt sind. Weiterhin umfasst die Impedanzanpasseinrichtung 9 einen zweiten Multiplizierer 15, der der Bildung des Phasenimpedanzreferenzspannungsamplitudenwertes $\hat{U}_{ZA,ref}$, $\hat{U}_{ZB,ref}$, $\hat{U}_{ZB,ref}$ dient und dem dazu der Referenzphasenstromamplitudenwert $\hat{I}_{A, B, C, ref}$ und der Impedanzbetragswert |Z| zugeführt sind. Die Bil-

dung des Phasenimpedanzreferenzspannungsamplitudenwertes $\hat{U}_{ZA,ref}$, $\hat{U}_{ZB,ref}$, $\hat{U}_{ZB,ref}$ erfolgt gemäss der bereits vorstehend angegebenen Formel.

Zur Bildung der normierten Phasennetzspannung $U_{NA, \alpha, nom}$, $U_{NB, \alpha, nom}$, $U_{NC, \alpha, nom}$ ist ein Normierer 16 der Impedanzanpasseinrichtung 9 vorgesehen, dem gemäss Fig. 4 der konstante Phasenspannungsamplitudenwert $\hat{U}_{NABC}$ und die verschobene Phasennetzspannung $U_{NA, \alpha}$, $U_{NB, \alpha}$, $U_{NC, \alpha}$ der entsprechenden Phase A, B, C zugeführt sind. Die Erzeugung der normierten Phasennetzspannung $U_{NA, \alpha, nom}$, $U_{NB, \alpha, nom}$, $U_{NC, \alpha, nom}$ erfolgt gemäss der bereits vorstehend angegebenen Formel. Zudem ist in der Impedanzanpasseinrichtung 9 ein Phasenschieber 17 zur Generierung der verschobenen Phasennetzspannung $U_{NA, \alpha}$, $U_{NB, \alpha}$, $U_{NC, \alpha}$ vorgesehen, dem die Phasennetzspannung $U_{NA}$, $U_{NB}$, $U_{NC}$ der entsprechenden Phase A, B, C und der Impedanzwinkel $\alpha$ zugeführt sind, wobei die Generierung der verschobenen Phasennetzspannung $U_{NA, \alpha}$, $U_{NB, \alpha}$, $U_{NC, \alpha}$ nach der bereits vorstehend erwähnten Formel erfolgt.

Die erfindungsgemässe Vorrichtung zeichnet sich insgesamt durch einen sehr einfachen und kostengünstigen Aufbau aus, da der Schaltungsaufwand äusserst gering ist und zudem nur eine geringe Anzahl an Bauelementen für den Aufbau benötigt wird. Mit der erfindungsgemässen Vorrichtung ist das erfindungsgemässe Verfahren zum Betrieb der Ladevorrichtung 1 für die Spannungserhaltungseinrichtung 2 somit in besonders einfacher Weise ausführbar.

Es versteht sich, dass der Fachmann andere als die im Ausführungsbeispiel angegebene Blöcke, Einheiten und Signale mit gleicher Wirkung verwenden kann.

**Bezugszeichenliste**

| | |
|---|---|
| 1 | Ladevorrichtung |
| 2 | Spannungserhaltungseinrichtung |
| 3 | Transformator |
| 4 | elektrisches Wechselspannungsversorgungsnetz |
| 5 | Gleichrichter |
| 6 | Regelungseinrichtung |
| 7 | Ansteuerschaltung |
| 8 | Berechnungseinheit |
| 9 | Impedanzanpasseinrichtung |
| 10 | Reglereinheit |
| 11 | Proportional-Integral-Regler |
| 12 | Oberschwingungsfilter |
| 13 | Subtrahierer |
| 14 | erster Multiplizierer |
| 15 | zweiter Multiplizierer |
| 16 | Normierer |
| 17 | Phasenschieber |

**Patentansprüche**

1. Verfahren zum Betrieb einer Ladevorrichtung (1) für eine Spannungserhaltungseinrichtung (2), bei dem ein an Phaseneingängen ($P_A$; $P_B$; $P_C$) über einen Transformator (3) mit einem elektrischen Wechselspannungsversorgungsnetz (4) verbundener Gleichrichter (5) der Ladevorrichtung (1) mittels eines aus Referenzladespannungen ($U_{LA, ref}$; $U_{LB, ref}$; $U_{LC, ref}$) gebildeten Ansteuersignals (S) angesteuert wird, wobei an jedem Phaseneingang ($P_A$; $P_B$; $P_C$) eine Ladespannung ($U_{LA}$; $U_{LB}$; $U_{LC}$) für die entsprechende Phase (A; B; C) erzeugt wird und auf der Gleichspannungsseite des Gleichrichters (5) eine im wesentlichen konstante Gleichspannung ($U_{DC}$) generiert wird, **dadurch gekennzeichnet, dass** jede Ladespannung ($U_{LA}$; $U_{LB}$; $U_{LC}$) derart erzeugt wird, dass in der entsprechenden Phase (A; B; C) ein Ladestrom ($I_{LA}$; $I_{LB}$; $I_{LC}$) im wesentlichen proportional zu einer Phasennetzspannung ($U_{NA}$; $U_{NB}$; $U_{NC}$) der entsprechenden Phase (A; B; C) des elektrischen Wechselspannungsversorgungsnetz (3) eingeprägt wird.

2. Verfahren nach Anspruch 1, **dadurch gekennzeichnet, dass** die Referenzladespannung ($U_{LA, ref}$; $U_{LB, ref}$; $U_{LC, ref}$) aus der Phasennetzspannung ($U_{NA}$; $U_{NB}$; $U_{NC}$) der entsprechenden Phase (A; B; C) und einem durch Ausregeln der Gleichspannung ($U_{DC}$) auf einen Gleichspannungssollwert ($U_{DC, soll}$) erzeugten Referenzphasenstromamplitudenwert ($\hat{I}_{A, B, C, ref}$) gebildet wird.

3. Verfahren nach Anspruch 2, **dadurch gekennzeichnet, dass** das Ausregeln nach Massgabe einer Proportional-Integral-Charakteristik erfolgt.

4. Verfahren nach Anspruch 2, **dadurch gekennzeichnet, dass** mindestens eine bezüglich der Phasennetzspannung ($U_{NA}$; $U_{NB}$; $U_{NC}$) harmonische Oberschwingung aus der Gleichspannung ($U_{DC}$) ausgefiltert wird.

5. Verfahren nach Anspruch 2, **dadurch gekennzeichnet, dass** aus dem Referenzphasenstromamplitudenwert ($\hat{I}_{A, B, C, ref}$) und der Phasennetzspannung ($U_{NA}$; $U_{NB}$; $U_{NC}$) eine Phasenimpedanzreferenzspannung ($U_{ZA,ref}$; $U_{ZB,ref}$; $U_{ZB,ref}$) der entsprechenden Phase (A; B; C) gebildet wird und dass die Referenzladespannung ($U_{LA, ref}$; $U_{LB, ref}$; $U_{LC, ref}$) durch Subtraktion der Phasenimpedanzreferenzspannung ($U_{ZA,ref}$; $U_{ZB,ref}$; $U_{ZB,ref}$) von der Phasennetzspannung ($U_{NA}$; $U_{NB}$; $U_{NC}$) gebildet wird.

6. Verfahren nach Anspruch 5, **dadurch gekennzeichnet, dass** die Phasenimpedanzreferenzspannung ($U_{ZA,ref}$; $U_{ZB,ref}$; $U_{ZB,ref}$) aus einem

Phasenimpedanzreferenzspannungsamplituden-wert ($\hat{U}_{ZA,ref}$; $\hat{U}_{ZB,ref}$; $\hat{U}_{ZB,ref}$) der entsprechenden Phase (A; B; C) und einer normierten Phasennetz-spannung ($U_{NA,\,\alpha,\,nom}$; $U_{NB,\,\alpha,\,nom}$; $U_{NC,\,\alpha,\,nom}$) der entsprechenden Phase (A; B; C) erzeugt wird.

7. Verfahren nach Anspruch 6, **dadurch gekennzeichnet, dass** der Phasenimpedanzreferenz-spannungsamplitudenwert ($\hat{U}_{ZA,ref}$; $\hat{U}_{ZB,ref}$; $\hat{U}_{ZB,ref}$) aus dem Referenzphasenstromamplitudenwert ($\hat{I}_{A,\,B,\,C,\,ref}$) und einem Impedanzbetragswert ($|Z|$) einer an jedem Phaseneingang ($P_A$; $P_B$; $P_C$) der entsprechenden Phase (A; B; C) angeschlossenen Impedanz (Z) des Transformators (3) gebildet wird.

8. Verfahren nach Anspruch 6, **dadurch gekennzeichnet, dass** die normierte Phasennetzspan-nung ($U_{NA,\,\alpha,\,nom}$; $U_{NB,\,\alpha,\,nom}$; $U_{NC,\,\alpha,\,nom}$) mittels Division einer verschobenen Phasennetzspannung ($U_{NA,\,\alpha}$; $U_{NB,\,\alpha}$; $U_{NC,\,\alpha}$) der entsprechenden Phase (A; B; C) durch einen konstanten Phasenspan-nungsamplitudenwert ($\hat{U}_{NABC}$) gebildet wird.

9. Verfahren nach Anspruch 8, **dadurch gekennzeichnet, dass** die verschobene Phasennetzspan-nung ($U_{NA,\,\alpha}$; $U_{NB,\,\alpha}$; $U_{NC,\,\alpha}$) durch Verschiebung der Phasennetzspannung ($U_{NA}$; $U_{NB}$; $U_{NC}$) um einen Impedanzwinkel ($\alpha$) einer an jedem Phaseneingang ($P_A$; $P_B$; $P_C$) der entsprechenden Phase (A; B; C) angeschlossenen Impedanz (Z) des Transformators (3) gebildet wird.

10. Vorrichtung zur Durchführung eines Verfahren zum Betrieb einer Ladevorrichtung (1) für eine Spannungserhaltungseinrichtung (2) mit einer der Erzeugung von Referenzladespannungen ($U_{LA,\,ref}$; $U_{LB,\,ref}$; $U_{LC,\,ref}$) dienenden Regelungseinrichtung (6), die über eine Ansteuerschaltung (7) zur Bildung eines Ansteuersignals (S) aus den Referenzladespannungen ($U_{LA,\,ref}$; $U_{LB,\,ref}$; $U_{LC,\,ref}$) mit einem Gleichrichter (5) der Ladevorrichtung (1) verbunden ist, wobei der Gleichrichter (5) an jedem Phaseneingang ($P_A$; $P_B$; $P_C$) eine Ladespannung ($U_{LA}$; $U_{LB}$; $U_{LC}$) für die entsprechende Phase (A; B; C) erzeugt und mit den Phaseneingängen ($P_A$; $P_B$; $P_C$) über einen Transformator (3) mit einem elektrischen Wechselspannungsversorgungsnetz (4) verbunden ist und auf seiner Gleichspannungsseite eine im wesentlichen konstante Gleichspannung ($U_{DC}$) generiert, **dadurch gekennzeichnet, dass** die Regelungseinrichtung (6) umfasst eine Berechnungseinheit (8) zur Bildung der Referenzladespannungen ($U_{LA,\,ref}$; $U_{LB,\,ref}$; $U_{LC,\,ref}$), der Phasennetzspannungen ($U_{NA}$; $U_{NB}$; $U_{NC}$) des elektrischen Wechselspannungsversorgungsnetzes (4) eingangsseitig zugeführt sind, wobei jeweils eine Phasennetzspannung ($U_{NA}$; $U_{NB}$; $U_{NC}$) einer Impedanzanpasseinrichtung (9) der entsprechenden

Phase (A; B; C) zugeführt ist und eine Reglereinheit (10) zur Erzeugung eines Refe-renzphasenstromamplitudenwertes ($\hat{I}_{A,\,B,\,C,\,ref}$), der die Gleichspannung ($U_{DC}$) und ein Gleichspannungssollwert ($U_{DC,\,soll}$) zugeführt sind, wobei der Referenzphasenstromamplitudenwert ($\hat{I}_{A,B,\,C,\,ref}$) jeder Impedanzanpasseinrichtung (9) eingangsseitig zugeführt ist.

11. Vorrichtung nach Anspruch 10, **dadurch gekennzeichnet, dass** die Reglereinheit (10) einen Proportional-Integral-Regler (11) aufweist, dem ein Gleichspannungsdifferenzsignal ($U_{DC,\,diff}$), welches gebildet ist durch den Gleichspannungssollwert ($U_{DC,\,soll}$) und einen gefilterten Gleichspannungswert ($U_{DC,\,F}$), eingangsseitig zugeführt ist und ausgangsseitig der Referenzphasenstromam-plitudenwert ($\hat{I}_{A,\,B,\,C,\,ref}$) anliegt.

12. Vorrichtung nach Anspruch 11, **dadurch gekennzeichnet, dass** die Reglereinheit (10) ein Oberschwingungsfilter (12) zur Ausfilterung mindestens einer bezüglich der Phasennetzspannung ($U_{NA}$; $U_{NB}$; $U_{NC}$) harmonischen Oberschwingung aus der Gleichspannung ($U_{DC}$) aufweist, wobei dem Ober-schwingungsfilter (12) eingangsseitig die Gleich-spannung ($U_{DC}$) zugeführt ist und ausgangsseitig der gefilterte Gleichspannungswert ($U_{DC,\,F}$) anliegt.

13. Vorrichtung nach einem der Ansprüche 10 bis 12, **dadurch gekennzeichnet, dass** am Ausgang der Impedanzanpasseinrichtung (9) eine Phasenimpedanzreferenzspannung ($U_{ZA,ref}$; $U_{ZB,ref}$; $U_{ZB,ref}$) der entsprechenden Phase (A; B; C) anliegt und jede Impedanzanpasseinrichtung (9) ausgangsseitig mit jeweils einem der Bildung der Referenzladespannung ($U_{LA,\,ref}$; $U_{LB,\,ref}$; $U_{LC,\,ref}$) dienenden Subtrahierer (13) verbunden ist, dem die Phasennetzspannung ($U_{NA}$; $U_{NB}$; $U_{NC}$) der entsprechenden Phase (A; B; C) zugeführt ist.

14. Vorrichtung nach Anspruch 13, **dadurch gekennzeichnet, dass** die Impedanzanpasseinrichtung (9) einen ersten Multiplizierer (14) zur Erzeugung der Phasenimpedanzreferenzspannung ($U_{ZA,ref}$; $U_{ZB,ref}$; $U_{ZB,ref}$) aufweist, dem ein Phasenimpedanzreferenzspannungsamplituden-wert ($\hat{U}_{ZA,ref}$; $\hat{U}_{ZB,ref}$; $\hat{U}_{ZB,ref}$) der entsprechenden Phase (A; B; C) und eine normierte Phasennetz-spannung ($U_{NA,\,\alpha,\,nom}$; $U_{NB,\,\alpha,\,nom}$; $U_{NC,\,\alpha,\,nom}$) der entsprechenden Phase (A; B; C) zugeführt sind.

15. Vorrichtung nach Anspruch 14, **dadurch gekennzeichnet, dass** die Impedanzanpasseinrichtung (9) einen zweiten Multiplizierer (15) zur Bildung des Phasenimpedanzreferenzspannungsamplituden-wertes ($\hat{U}_{ZA,ref}$; $\hat{U}_{ZB,ref}$; $\hat{U}_{ZB,ref}$) aufweist, dem der Referenzphasenstromamplitudenwert ($\hat{I}_{A,\,B,\,C,\,ref}$)

und ein Impedanzbetragswert ($|Z|$) einer an jedem Phaseneingang ($P_A$; $P_B$; $P_C$) der entsprechenden Phase (A; B; C) angeschlossenen Impedanz (Z) des Transformator (3) zugeführt sind.

16. Vorrichtung nach Anspruch 14, **dadurch gekennzeichnet, dass** die Impedanzanpasseinrichtung (9) einen Normierer (16) zur Bildung der normierten Phasennetzspannung ($U_{NA, \alpha, nom}$; $U_{NB, \alpha, nom}$; $U_{NC, \alpha, nom}$) aufweist, dem ein konstanter Phasenspannungsamplitudenwert ($\hat{U}_{NABC}$) und eine verschobenen Phasennetzspannung ($U_{NA, \alpha}$; $U_{NB, \alpha}$; $U_{NC, \alpha}$) der entsprechenden Phase (A; B; C) zugeführt sind.

17. Vorrichtung nach Anspruch 16, **dadurch gekennzeichnet, dass** die Impedanzanpasseinrichtung (9) einen Phasenschieber (17) zur Bildung der verschobenen Phasennetzspannung ($U_{NA, \alpha}$; $U_{NB, \alpha}$; $U_{NC, \alpha}$) aufweist, dem die Phasennetzspannung ($U_{NA}$; $U_{NB}$; $U_{NC}$) der entsprechenden Phase (A; B; C) und ein Impedanzwinkel ($\alpha$) einer an jedem Phaseneingang ($P_A$; $P_B$; $P_C$) der entsprechenden Phase (A; B; C) angeschlossenen Impedanz (Z) des Transformators(3) zugeführt sind.

Fig. 1

EP 1 284 538 A2

Fig. 2

Fig. 3

Fig. 4